# EUROPEAN PATENT APPLICATION

(11) **EP 4 656 418 A1**
(43) Date of publication of application: **03.12.2025**
(21) Application number: 25176798.4
(22) Date of filing: 15.05.2025
(51) Int. Cl.: B60G 7/00, B60G 7/02, B60K 1/04, B60K 7/00, B60K 17/00, B60K 17/04, B62D 3/02, B62D 1/16, B62D 5/00, B62D 7/16

(54) **BATTERY ELECTRIC VEHICLE**

(30) Priority: 27.05.2024 JP 2024085604
(71) Applicant: TOYOTA JIDOSHA KABUSHIKI KAISHA, Toyota-shi, Aichi-ken 471-8571 (JP)
(72) Inventor: ICHIKAWA, Akitaka, TOYOTA-SHI, AICHI-KEN, 471-8571 (JP); MURASE, Eiji, TOYOTA-SHI, AICHI-KEN, 471-8571 (JP); FUKUI, Hiroki, TOYOTA-SHI, AICHI-KEN, 471-8571 (JP)
(74) Representative: Cabinet Beau de Loménie

(57) **Abstract**

A battery electric vehicle (100) includes a drive unit (20) including a motor (25) and a speed reducer (26) that transmits rotation generated by the motor (25) to a drive shaft (21), and a steering mechanism (41) that controls a steered angle of front wheels (10) in response to an operation of a steering wheel (15). A battery (14) is disposed between a driver's seat (12) and a front passenger seat (13) so as to extend from a front end to a rear end of a passenger compartment. The drive unit (20) has a single-axis structure and is arranged between the front wheels (10). The steering mechanism (41) includes a transmission unit (18), tie rods (19), an intermediate shaft (17), kingpins (35), and suspension arms (36). The tie rods (19) are connected to hub carriers (34) at positions forward of the kingpins (35). The intermediate shaft (17) extends in a space on a side of the drive unit (20) in the vehicle width direction to connect the steering wheel (15) to the transmission unit (20).

## Description

### CROSS-REFERENCE TO RELATED APPLICATIONS

This application is based upon and claims the benefit of priority from Japanese Patent Application No. 2024-085604, filed on May 27, 2024, the entire contents of which are incorporated herein by reference.

### BACKGROUND

### 1. Field

The present disclosure relates to a battery electric vehicle.

### 2. Description of Related Art

Japanese Laid-Open Patent Publication No. 2023-520139 discloses a battery electric vehicle. In this battery electric vehicle, a battery is disposed between a driver's seat and a front passenger seat.

There is a demand for sports-type battery electric vehicles. In a battery electric vehicle, achieving proportions suitable for a sports car requires lowering the height of the front portion of the vehicle, which is located forward of the driver's seat and the front passenger seat. Additionally, lowering the seating position within the passenger compartment is desirable. Furthermore, good steering feel suitable for sports cars is also desired.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a battery electric vehicle is configured to drive left and right front wheels using electricity stored in a battery. The battery electric vehicle includes a drive unit including a motor and a speed reducer configured to transmit rotation generated by the motor to a drive shaft, and a steering mechanism configured to control a steered angle of the front wheels in response to an operation of a steering wheel. The battery is disposed between a driver's seat and a front passenger seat so as to extend from a front end to a rear end of a passenger compartment. The drive unit has a single-axis structure in which the speed reducer and the drive shaft are disposed on a rotation axis of the motor, and is disposed between the front wheels. The steering mechanism includes a transmission unit disposed forward of the drive unit and configured to convert a movement of the steering wheel into a movement in a vehicle width direction, tie rods that are disposed at opposite ends of the transmission unit in the vehicle width direction and connect hub carriers of the respective front wheels to the transmission unit, an intermediate shaft configured to transmit a movement of the steering wheel to the transmission unit, kingpins that are pivot shafts of the hub carriers, and suspension arms each connecting a vehicle body and one of the kingpins to each other. Each of the suspension arms is connected to the vehicle body by multiple bushings. The multiple bushings include a front bushing and a rear bushing disposed rearward of the front bushing, the front bushing having a greater rigidity than the rear bushing. Each tie rod is connected to the corresponding hub carrier at a position forward of the corresponding kingpin. The intermediate shaft extends in a space on side of the drive unit in the vehicle width direction to connect the steering wheel to the transmission unit.

Other features and aspects will be apparent from the following detailed description, the drawings, and the claims.

### BRIEF DESCRIPTION OF THE DRAWINGS

Fig. 1 is a schematic diagram of an arrangement of a battery and devices around the battery when a battery electric vehicle according to an embodiment is viewed from above.
Fig. 2 is a schematic diagram of the battery electric vehicle shown in Fig. 1, illustrating the arrangement of the battery and the devices around the battery when the battery electric vehicle is viewed from the side.
Fig. 3 is a schematic diagram of a drive unit provided in the battery electric vehicle shown in Fig. 1.
Fig. 4 is a schematic diagram illustrating a manner in which a steering mechanism and a front wheel are connected to each other in the battery electric vehicle shown in Fig. 1.
Fig. 5 is a schematic diagram illustrating a state of the front wheel when the battery electric vehicle shown in Fig. 1 is turning left at high speed.
Fig. 6 is a schematic diagram illustrating a manner in which the steering mechanism is connected to the front wheel when a tie rod is connected to a hub carrier at a position rearward of a kingpin.
Fig. 7 is a diagram illustrating a positional relationship among a drive unit, an intermediate shaft, and a transmission unit in the battery electric vehicle shown in Fig. 1.
Fig. 8 is a schematic diagram illustrating an arrangement of brake discs and brake calipers provided in the battery electric vehicle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

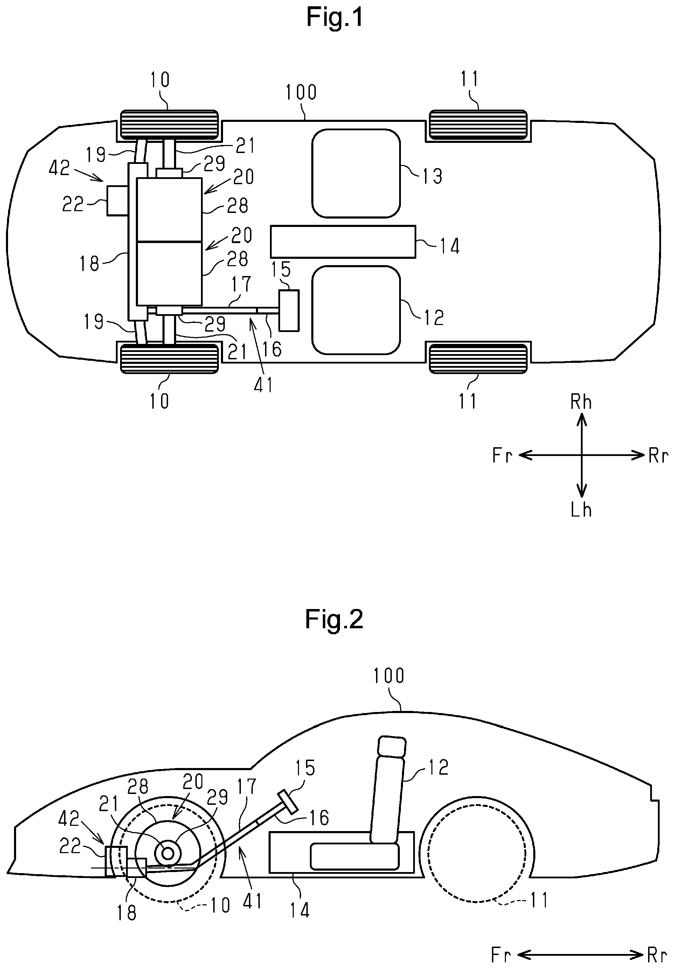

A battery electric vehicle 100 according to an embodiment will now be described with reference to Figs. 1 to 8.

In the following description, terms related to orientations or directions, such as "front", "rear", "upper", "lower", "right", and "left", are defined based on the battery electric vehicle 100.

In Figs. 1 to 6 and 8, "Fr" indicates the front direction of the battery electric vehicle 100. In Figs. 1 to 6 and 8, "Rr" indicates the rear direction of the battery electric vehicle 100. In Figs. 1 and 3 to 7, "Rh" indicates the right side as viewed from an occupant facing forward in the battery electric vehicle 100. In Figs. 1 and 3 to 7, "Lh" indicates the left side as viewed from an occupant facing forward in the battery electric vehicle 100.

### Arrangement of a Battery 14 and Drive Units 20

Fig. 1 shows an arrangement of a battery 14 and devices around the battery 14 when the battery electric vehicle 100 is viewed from above. Fig. 2 shows the arrangement of the battery 14 and the devices around the battery 14 when the battery electric vehicle 100 is viewed from the left side in Fig. 1.

As shown in Fig. 1, the battery electric vehicle 100 includes the battery 14. As shown in Figs. 1 and 2, the battery 14 is disposed between a driver's seat 12 and a front passenger seat 13 so as to extend from a front end to a rear end of a passenger compartment. The battery 14 houses multiple battery cells. The battery 14 stores electricity in the battery cells.

As shown in Fig. 1, the drive units 20 are disposed between left and right front wheels 10. As shown in Fig. 1, in the battery electric vehicle 100, one drive unit 20 is disposed on each of the right side and the left side in Fig. 1 with respect to the center in the vehicle width direction. In Fig. 1, the drive unit 20 disposed on the right side is connected to the right front wheel of the front wheels 10 by a drive shaft 21. In Fig. 1, the drive unit 20 disposed on the left side is connected to the left front wheel of the front wheels 10 by a drive shaft 21.

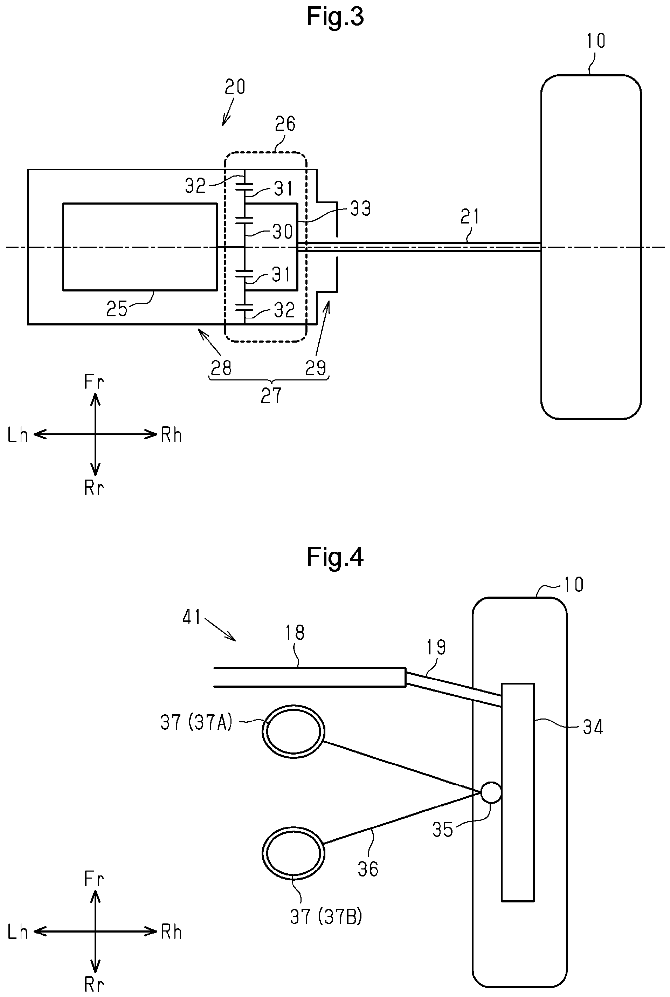

Fig. 3 shows a configuration of one of the drive units 20 when the battery electric vehicle 100 is viewed from above. Specifically, Fig. 3 shows the configuration of the drive unit 20 disposed on the right side in Fig. 1. The front wheel 10 shown in Fig. 3 is the right front wheel.

As shown in Fig. 3, each drive unit 20 includes a motor 25 and a speed reducer 26. In the drive unit 20, the motor 25 and the speed reducer 26 are surrounded by a housing 27.

As shown in Fig. 3, the speed reducer 26 includes a sun gear 30, a planetary carrier 33 rotatably supporting multiple pinions 31, and a ring gear 32. The speed reducer 26 includes a planetary gear mechanism.

As shown in Fig. 3, in the drive unit 20, the motor 25 is connected to the sun gear 30 of the speed reducer 26. In the speed reducer 26, the pinions 31 supported by the planetary carrier 33 are disposed between the sun gear 30 and the ring gear 32. The pinions 31 mesh with both the sun gear 30 and the ring gear 32. In the speed reducer 26, the ring gear 32 is fixed to the housing 27.

As shown in Fig. 3, the drive shaft 21 is connected to the planetary carrier 33. In the drive unit 20, rotation generated by the motor 25 is transmitted to the sun gear 30, the planetary carrier 33, and the drive shaft 21 in that order. Since the sun gear 30, the pinions 31, and the ring gear 32 have different numbers of teeth, the rotation generated by the motor 25 is decelerated before being transmitted to the drive shaft 21. The speed reducer 26 transmits the rotation generated by the motor 25 to the drive shaft 21 after decelerating the rotation.

The long-dash short-dash line in Fig. 3 indicates a rotation axis of the motor 25. As shown in Fig. 3, in the drive unit 20, the speed reducer 26, and the drive shaft 21 are disposed on the rotation axis of the motor 25. The rotation axis of the motor 25, the rotation axis of the speed reducer 26, and the rotation axis of the drive shaft 21 are arranged on one straight line. Therefore, the drive unit 20 has a single-axis structure having a single rotation axis.

In the battery electric vehicle 100, the front wheels 10 are drive wheels. As shown in Figs. 1 and 3, each drive shaft 21 is connected to the corresponding drive unit 20 at one end, and is connected to the corresponding front wheel 10 at the other end. In Fig. 1, the drive unit 20 disposed on the right side rotates the right front wheel through the corresponding drive shaft 21. In Fig. 1, the drive unit 20 disposed on the left side rotates the left front wheel through the corresponding drive shaft 21.

Electricity stored in the battery 14 is supplied to each motor 25. The motor 25 generates rotation using the supplied electricity. The rotation generated by the motor 25 is transmitted to the corresponding front wheel 10 through the speed reducer 26 and the drive shaft 21, thereby rotating the front wheel 10. In this manner, the battery electric vehicle 100 drives the front wheels 10 using the electricity stored in the battery 14.

The drive unit 20 shown in Fig. 3 is the drive unit 20 disposed on the right side in Fig. 1. In Fig. 3, the motor 25, the speed reducer 26, the drive shaft 21, and the front wheel 10 are arranged in that order in a direction from the center of the battery electric vehicle 100 in the vehicle width direction toward the right side.

In the drive unit 20 disposed on the left side in Fig. 1, the order in which the motor 25, the speed reducer 26, the drive shaft 21, and the front wheel 10 are arranged is opposite to that in Fig. 3. That is, the motor 25, the speed reducer 26, the drive shaft 21, and the front wheel 10 are arranged in that order in a direction from the center of the battery electric vehicle 100 in the vehicle width direction toward the left side. As described above, in the battery electric vehicle 100, the motor 25, the speed reducer 26, the drive shaft 21, and the front wheel 10 are arranged in that order in the vehicle width direction.

As shown in Fig. 3, the drive shaft 21 is connected to the planetary carrier 33 inside the housing 27. As shown in Fig. 3, the housing 27 includes a central portion 28 and an end portion 29.

The central portion 28 surrounds the motor 25 and the speed reducer 26.

As shown in Fig. 1, in the housing 27, the end portion 29 is disposed at an outward portion in the vehicle width direction with respect to the central portion 28. As shown in Fig. 3, the end portion 29 surrounds a portion of the drive shaft 21 connected to the speed reducer 26. As shown in Fig. 3, the drive shaft 21 protrudes from the end portion 29 of the housing 27 and is connected to the front wheel 10.

### Configuration of a Steering Mechanism 41

The battery electric vehicle 100 includes the steering mechanism 41. The steering mechanism 41 controls the steered angle of the front wheels 10 in accordance with operation of a steering wheel 15.

The steering mechanism 41 includes a column 16, an intermediate shaft 17, a transmission unit 18, and left and right tie rods 19.

As shown in Figs. 1 and 2, the column 16 is connected to the steering wheel 15. The column 16 fixes the position of the steering wheel 15. The column 16 is connected to the intermediate shaft 17. The column 16 transmits movement of the steering wheel 15 to the intermediate shaft 17.

As shown in Figs. 1 and 2, the intermediate shaft 17 is connected to the column 16 at one end, and is connected to the transmission unit 18 at the other end. The intermediate shaft 17 transmits the movement of the steering wheel 15 to the transmission unit 18.

As shown in Figs. 1 and 2, the transmission unit 18 is disposed forward of the drive units 20. In Fig. 2, the long-dash short-dash line extending through the transmission unit 18 indicates the center of the transmission unit 18 in the height direction. As shown in Fig. 2, the center of the transmission unit 18 in the height direction is located below the drive shaft 21. That is, the transmission unit 18 is disposed below the drive shaft 21.

The transmission unit 18 converts movement of the steering wheel 15 into movement in the vehicle width direction. The transmission unit 18 incorporates a rack and pinion. In the transmission unit 18, the pinion rotates in accordance with the movement transmitted from the intermediate shaft 17. The rack moves in the vehicle width direction in accordance with rotation of the pinion, so that the movement of the steering wheel 15 is converted into movement in the vehicle width direction.

Fig. 4 shows a manner in which the right front wheel is connected to the steering mechanism 41 when viewed from above the battery electric vehicle 100. The manner in which the left front wheel is connected to the steering mechanism 41 is a laterally inverted version of Fig. 4.

Each of the left and right front wheels 10 includes a hub carrier 34. As shown in Fig. 1, the tie rods 19 are disposed at the opposite ends of the transmission unit 18 in the vehicle width direction. As shown in Fig. 4, the tie rods 19 respectively connect the hub carrier 34 of the left and right front wheels 10 to the transmission unit 18.

The steering mechanism 41 includes left and right kingpins 35, left and right suspension arms 36, and an electric power steering system 42.

As shown in Fig. 4, the kingpin 35 is installed in the hub carrier 34. The kingpin 35 is a pivot shaft of the hub carrier 34.

The suspension arm 36 supports the kingpin 35 by connecting the body of the battery electric vehicle 100 and the kingpin 35 to each other. The suspension arm 36 has a V-shape.

The suspension arm 36 is connected to the vehicle body by multiple bushings 37. As shown in Fig. 4, the suspension arm 36 connected to the right front wheel is connected to the vehicle body by two bushings 37 arranged in the front-rear direction. The two bushings 37 include a front bushing 37A and a rear bushing 37B disposed rearward of the front bushing 37A. The front bushing 37A has greater rigidity than the rear bushing 37B.

As shown in Fig. 4, the tie rod 19 is connected to the hub carrier 34 at a position forward of the kingpin 35.

In the steering mechanism 41, the electric power steering system 42 reduces the force required to steer the steering wheel 15. The electric power steering system 42 includes a power steering motor 22.

As shown in Figs. 1 and 2, the power steering motor 22 is disposed forward of the drive units 20 and is connected to the transmission unit 18. The power steering motor 22 is driven in accordance with the movement of the steering wheel 15. When the driving force of the power steering motor 22 is transmitted to the transmission unit 18, the force required for steering the steering wheel 15 is reduced. The power steering motor 22 may include a mechanism that decelerates the rotation generated by the power steering motor 22 and transmits the decelerated rotation to the transmission unit 18.

The driving force of the power steering motor 22 is transmitted to the rack of the rack and pinion included in the transmission unit 18. The electric power steering system 42 used in the battery electric vehicle 100 is a rack-assist electric power steering system.

Change in the Steered Angle of the Front Wheels 10 in the Battery Electric Vehicle 100 During Turning

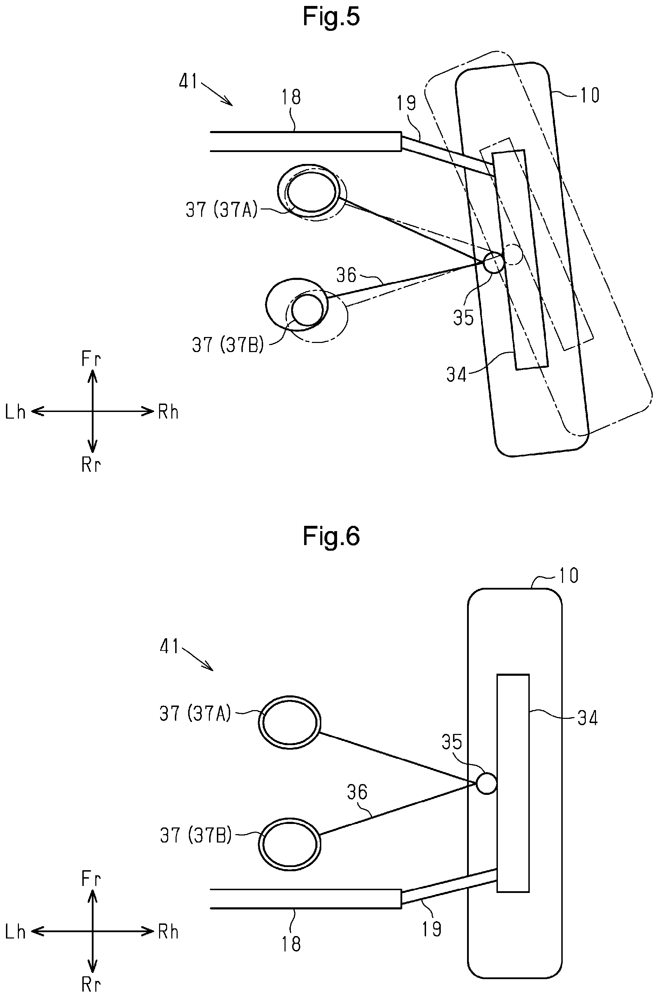

Similarly to Fig. 4, Fig. 5 shows a manner in which the right front wheel is connected to the steering mechanism 41 when viewed from above the battery electric vehicle 100. Fig. 5 shows a state of the right front wheel in a case in which the battery electric vehicle 100 is turning left at high speed.

The movement of the steering wheel 15 is transmitted to the transmission unit 18 via the column 16 and the intermediate shaft 17. The transmission unit 18 converts movement of the steering wheel 15 into movement in the vehicle width direction. In this case, the movement of the steering wheel 15 rotated left is transmitted to the transmission unit 18. The transmission unit 18 converts the movement of the steering wheel 15 turned left into a leftward movement in Fig. 5. At this time, the power steering motor 22 transmits the driving force to the transmission unit 18, thereby assisting the conversion of the movement by the transmission unit 18.

The leftward movement output from the transmission unit 18 is transmitted to the hub carriers 34 via the tie rods 19. Each hub carrier 34, to which the leftward movement is transmitted, pivots leftward about the kingpin 35. As a result, the front wheels 10 are steered leftward, generating a leftward steered angle.

In this manner, the steered angle of the front wheels 10 is changed by the steering mechanism 41 transmitting the movement of the steering wheel 15 to the front wheels 10. When the battery electric vehicle 100 is turning at high speed, the steered angle of the front wheels 10 is influenced not only by the operation of the steering mechanism 41 but also by compliance steer due to deflection of the bushings 37.

In Fig. 5, the shape represented by the long-dash short-dash lines illustrates a specific example of the right front wheel and the steering mechanism 41 in a state in which there is no compliance steer, when the battery electric vehicle 100 is turning left at high speed. However, due to compliance steer, the actual position of the right front wheel and the steering mechanism 41 is as shown by the solid lines in Fig. 5.

During turning, especially when the vehicle is turning at high speed, the front wheels 10 maintain traction to resist centrifugal force. As a result, of the left and right front wheels 10, the front wheel 10 on the outer side with respect to the turning center experiences a lateral force directed toward the turning center. In the case shown in Fig. 5, since the battery electric vehicle 100 is turning left, the right front wheel experiences a leftward lateral force.

The front bushing 37A has greater rigidity than the rear bushing 37B. Accordingly, as can be seen by comparing Figs. 4 and 5, when a lateral force acts on the front wheel 10, the rear bushing 37B deflects more than the front bushing 37A. At this time, the portion of the suspension arm 36 connected to the vehicle body via the rear bushing 37B moves leftward. As a result, as shown by the solid lines in Fig. 5, the steered angle of the front wheel 10 on the outer side with respect to the turning center becomes smaller than the steered angle shown by the long-dash short-dash lines in Fig. 5. In other words, the front wheel 10 shown by the solid lines in Fig. 5 enters a toe-out state relative to the front wheel 10 indicated by the long-dash short-dash lines in Fig. 5.

In this manner, in a vehicle that is turning while traveling at high speed, the front wheel 10 on the outer side with respect to the turning center is in a toe-out state due to compliance steer.

Fig. 6 shows a manner of connection between the right front wheel and the steering mechanism 41 in a comparative example. In this comparative example, when the vehicle is viewed from above, the tie rod 19 is connected to the hub carrier 34 at a position rearward of the kingpin 35. In this case, the transmission unit 18 is disposed rearward of the drive units 20.

The following describes the movement of the right front wheel and the steering mechanism 41, as shown in Fig. 6, when a vehicle equipped with the right front wheel and the steering mechanism 41 turns left at high speed. In a configuration in which the tie rod 19 is connected to the hub carrier 34 at a position rearward of the kingpin 35, the tie rod 19 inhibits the leftward movement of the portion of the suspension arm 36 that is connected to the vehicle body via the rear bushing 37B. Thus, in the configuration in which the tie rod 19 is connected to the hub carrier 34 at a position rearward of the kingpin 35, if the tie rod 19 has a relatively high rigidity, the tie rod 19 inhibits the toe-out tendency of the front wheel 10 caused by compliance steer.

To prevent the tie rod 19 from inhibiting the toe-out tendency of the front wheel 10 due to compliance steer, it is necessary to reduce the rigidity of the tie rod 19.

In the battery electric vehicle 100 of the present embodiment, the tie rod 19 is connected to the hub carrier 34 at a position forward of the kingpin 35. As a result, even if the tie rod 19 does not undergo elastic deformation, the difference in rigidity between the front and rear bushings 37 causes the outer front wheel 10 to exhibit a toe-out tendency. Thus, in a configuration in which the tie rod 19 is connected to the hub carrier 34 at a position forward of the kingpin 35, the tie rod 19 does not inhibit the toe-out tendency of the front wheel 10 due to compliance steer. Therefore, it is possible to use a tie rod 19 having greater rigidity than in the configuration in which the tie rod 19 is connected to the hub carrier 34 at a position rearward of the kingpin 35.

### Manner of Connection of the Intermediate Shaft 17

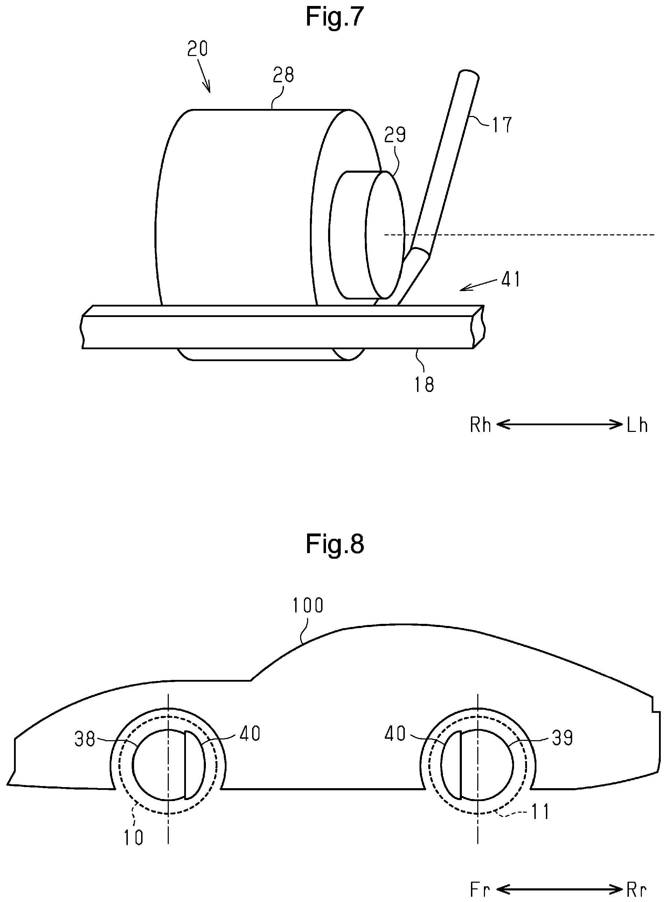

In the steering mechanism 41, the intermediate shaft 17 connects the steering wheel 15 to the transmission unit 18. Fig. 7 illustrates how the intermediate shaft 17 and the transmission unit 18 are connected, as viewed from the front of the battery electric vehicle 100. The dashed line in Fig. 7 indicates the position along which the drive shaft 21 extends. The drive unit 20 shown in Fig. 7 corresponds to the drive unit 20 positioned on the left side in Fig. 1.

As shown in Figs. 1, 2, and 7, the intermediate shaft 17 extends in a space on the side of the drive unit 20 in the vehicle width direction to connects the steering wheel 15 to the transmission unit 18. As shown in Figs. 2 and 7, the intermediate shaft 17 extends in a space below the drive shaft 21 to connect the steering wheel 15 to the transmission unit 18.

As shown in Figs. 3 and 7, the housing 27 is structured such that the end portion 29 is narrower than the central portion 28. As shown in Fig. 7, the intermediate shaft 17 extends in a space on the side of the central portion 28 in the vehicle width direction and below the end portion 29 to connect the steering wheel 15 to the transmission unit 18.

### Arrangement of Brake Calipers 40

Fig. 8 shows the arrangement of brake discs and the brake calipers 40 when the battery electric vehicle 100 is viewed from the left side in Fig. 1. As shown in Fig. 8, each of the front wheels 10 and the rear wheels 11 is provided with a brake caliper 40.

In Fig. 8, the long-dash short-dash line on the front wheel 10 represents the position of the center of the front wheel 10 in the vehicle longitudinal direction when the battery electric vehicle 100 is viewed from the left side in Fig. 1. As shown in Fig. 8, the brake caliper 40 is disposed rearward of the long-dash short-dash line on the front wheel 10. That is, the brake caliper 40 installed on the front wheel 10 is disposed at a rear portion of the front brake disc 38.

In Fig. 8, the long-dash short-dash line on the rear wheel 11 represents the position of the center of the rear wheel 11 in the vehicle longitudinal direction when the battery electric vehicle 100 is viewed from the left side in Fig. 1. As shown in Fig. 8, the brake caliper 40 is disposed forward of the long-dash short-dash line on the rear wheel 11. That is, the brake caliper 40 installed on the rear wheel 11 is disposed at a front portion of the rear brake disc 39.

### Operation of the Present Embodiment

During turning, particularly when a vehicle is turning at high speed, the vehicle's behavior in response to steering operations becomes more stable when the front wheel 10 on the outer side with respect to the turning center exhibits a toe-out tendency. In the case in which the tie rod 19 is connected to the hub carrier 34 at a position forward of the kingpin 35, increasing the rigidity of the tie rod 19 causes the front wheel 10 on the outer side with respect to the turning center to develop a toe-out tendency due to the difference in rigidity between the front and rear bushings 37. In contrast, in the case in which the tie rod 19 is connected to the hub carrier 34 at a position rearward of the kingpin 35, achieving a toe-out tendency in the front wheel 10 on the outer side with respect to the turning center requires the tie rod 19 to undergo elastic deformation. In other words, the rigidity of the tie rod 19 must be reduced to a level that allows the front wheel 10 on the outer side with respect to the turning center to exhibit a toe-out tendency. However, if the rigidity of the tie rod 19 is excessively low, the responsiveness to operation of the steering wheel 15 is lowered, leading to poor steering feel.

The battery 14 is disposed between the driver's seat 12 and the front passenger seat 13. As a result, the seating position in the battery electric vehicle 100 is lower than in a configuration in which the battery 14 is mounted beneath the floor of the driver's seat 12 and the front passenger seat 13.

The drive units 20 have a single-axis structure rather than a multi-axis structure. In a drive unit 20 having a single-axis structure, the motor 25 and the speed reducer 26 are arranged on a single axis. A drive unit 20 having a single-axis structure has a larger dimension in the vehicle width direction than a drive unit 20 having a multi-axis structure. However, a drive unit 20 having a single-axis structure has a compact dimension in the vehicle longitudinal direction and the vehicle vertical direction. In order to connect the tie rod 19 to the hub carrier 34 at a position forward of the kingpin 35, the transmission unit 18 needs to be disposed forward of the drive units 20. The battery electric vehicle 100 accommodates the transmission unit 18 in the space forward of the drive units 20, which is made available by the single-axis structure.

### Advantages of the Present Embodiment

(1) The battery electric vehicle 100 improves the steering feel while maintaining the proportion suitable for a sports car by improving the layout of devices.
(2) The transmission unit 18 is disposed below the drive shaft 21. The intermediate shaft 17 extends in a space below the drive shaft 21 to connect the steering wheel 15 to the transmission unit 18.
(3) The motor 25, the speed reducer 26, the drive shaft 21, and the front wheel 10 are arranged in that order in the vehicle width direction. The motor 25 and the speed reducer 26 are surrounded by the housing 27. The drive shaft 21 is connected to the speed reducer 26 inside the housing 27. The drive shaft 21 protrudes from an end portion 29 of the housing 27 in the vehicle width direction and is connected to the front wheel 10. The housing 27 is configured such that the end portion 29, which surrounds the drive shaft 21, is narrower than the central portion 28, which surrounds the motor 25 and the speed reducer 26. The intermediate shaft 17 extends in a space on the side of the central portion 28 in the vehicle width direction and below the end portion 29 to connect the steering wheel 15 to the transmission unit 18.

A space is formed around the end portion 29, which surrounds the drive shaft 21. The intermediate shaft 17 is arranged to extend in this space around the end portion 29. As a result, since the intermediate shaft 17 can be shortened as much as possible, it is possible to improve the steering feel and reduce the weight of the vehicle.

(4) Each of the front wheels 10 and the rear wheels 11 is provided with a brake caliper 40. The brake caliper 40 installed on the front wheel 10 is disposed at a rear portion of the front brake disc 38. The brake caliper 40 installed on the rear wheel 11 is disposed at a front portion of the rear brake disc 39.

If the brake caliper 40 is located outside the region between the rotation axis of the front wheel 10 and the rotation axis of the rear wheel 11 in the battery electric vehicle 100, the brake caliper 40 will be located farther from the center of gravity of the battery electric vehicle 100. When multiple devices are mounted at positions farther from the center of gravity, and their mass is distributed away from the center of gravity, the responsiveness of the battery electric vehicle 100 during turning decreases. In contrast, when multiple devices are mounted closer to the center of gravity, and their mass is concentrated near the center of gravity, the responsiveness of the battery electric vehicle 100 during turning improves. In the present embodiment, the brake calipers 40 are disposed between the rotation axis of the front wheels 10 and the rotation axis of the rear wheels 11 so that the brake calipers 40 are brought closer to the center of gravity of the battery electric vehicle 100. As a result, the battery electric vehicle 100 has an improved responsiveness during turning.

(5) The steering mechanism 41 includes the electric power steering system 42, which reduces the force required to steer the steering wheel 15. The electric power steering system 42 includes the power steering motor 22, which is driven in accordance with a movement of the steering wheel 15. The power steering motor 22 is disposed forward of the drive units 20 and is connected to the transmission unit 18.

The power steering motor 22 is attached to the transmission unit 18. The power steering motor 22 is disposed in the space forward of the drive units 20, which is made available by the single-axis structure. This configuration allows the battery electric vehicle 100 to include the power steering motor 22, while maintaining the proportion suitable for a sports car.

### Modifications

The above-described embodiment may be modified as follows. The above-described embodiment and the following modifications can be combined if the combined modifications remain technically consistent with each other.

In the battery electric vehicle 100, as shown in Fig. 1, the driver's seat 12 is disposed on the left side in Fig. 1, and the front passenger seat 13 is disposed on the right side in Fig. 1. The arrangement of the driver's seat 12 and the front passenger seat 13 may be reversed.

In this case, the position at which the steering wheel 15 is mounted with respect to the center of the battery electric vehicle 100 in the vehicle width direction is also reversed. Accordingly, the positions at which the column 16 and the intermediate shaft 17 are mounted are also reversed with respect to the center of the battery electric vehicle 100 in the vehicle width direction.

In the above-described battery electric vehicle 100, the intermediate shaft 17 extends in a space on the side of the central portion 28 of the drive unit 20 disposed on the left side and below the end portion 29, as viewed in Fig. 1. When the positions of the driver's seat 12 and the front passenger seat 13 are reversed, the intermediate shaft 17 extends in a space on a side of the central portion 28 and below the end portion 29 of the drive unit 20 disposed on the right side, as viewed in Fig. 1, to connect the steering wheel 15 to the transmission unit 18.

In the above-described battery electric vehicle 100, the front wheels 10 are drive wheels. The battery electric vehicle 100 may also be a four-wheel-drive vehicle in which, in addition to the front wheels 10, the rear wheels 11 are also driven.

In the above-described battery electric vehicle 100, the transmission unit 18 is disposed below the drive shaft 21. The position of the transmission unit 18, included in the battery electric vehicle 100, is not limited to the above-described embodiment. For example, the transmission unit 18 may be disposed above the drive shafts 21.

In the above-described battery electric vehicle 100, the intermediate shaft 17 extends in the space below the drive shaft 21 to connect the steering wheel 15 to the transmission unit 18. The configuration of the intermediate shaft 17 included in the battery electric vehicle 100 is not limited to the above-described embodiment. For example, the intermediate shaft 17 may extend in a space above the drive shaft 21 to connect the steering wheel 15 to the transmission unit 18.

In the above-described battery electric vehicle 100, the intermediate shaft 17 may extend in a space on the side of the central portion 28 and below the end portion 29 to connect the steering wheel 15 to the transmission unit 18. The configuration of the intermediate shaft 17 included in the battery electric vehicle 100 is not limited to the above-described embodiment. For example, the intermediate shaft 17 may extend in a space on the side of the end portion 29 to connect the steering wheel 15 to the transmission unit 18. For example, the intermediate shaft 17 may extend in a space on the side of the central portion 28 and above the end portion 29 to connect the steering wheel 15 to the transmission unit 18.

In the above-described battery electric vehicle 100, the housing 27 of the drive unit 20 includes the central portion 28 and the end portion 29, which is narrower than the central portion 28. The configuration of the housing 27 included in the battery electric vehicle 100 is not limited to the above-described embodiment. For example, in the housing 27, the end portion 29 may be configured to have the same size as the central portion 28 or to be wider than the central portion 28.

In the above-described battery electric vehicle 100, the end portion 29 is configured to be narrower than the central portion 28 in both the drive unit 20 disposed on the right side and the drive unit 20 disposed on the left side in Fig. 1. In the drive unit 20 disposed on the right side, with no intermediate shaft 17 extending in the space on the side, the end portion 29 does not need to be narrower than the central portion 28.

In the above-described battery electric vehicle 100, the drive shaft 21 is connected to the speed reducer 26 inside the housing 27, and protrudes from the end portion 29 to be connected to the front wheel 10. On the other hand, the speed reducer 26 may protrude from the housing 27, and the speed reducer 26 and the drive shaft 21 may be connected to each other outside the housing 27. In this case, the end portion 29 does not surround the drive shaft 21.

The steering mechanism 41 of the above-described battery electric vehicle 100 includes the electric power steering system 42. The steering mechanism 41 in the battery electric vehicle 100 does not necessarily need to employ the electric power steering system 42 as a power steering system that reduces the force required to steer the steering wheel 15.

For example, the battery electric vehicle 100 may include a hydraulic power steering system. Alternatively, the battery electric vehicle 100 may include an electro-hydraulic power steering system. If the battery electric vehicle 100 does not employ the electric power steering system 42 as its power steering system, the battery electric vehicle 100 may also be configured without the power steering motor 22. For example, the battery electric vehicle 100 does not necessarily need to include a power steering system.

In the above-described battery electric vehicle 100, the power steering motor 22 is disposed forward of the drive units 20 and is connected to the transmission unit 18. The position of the power steering motor 22 in the battery electric vehicle 100 is not limited to the above-described embodiment. In the battery electric vehicle 100, the power steering motor 22 may be disposed rearward of the drive units 20.

The above-described battery electric vehicle 100 employs the rack-assist electric power steering system 42. The position of the power steering motor 22 in the battery electric vehicle 100 and the configuration of the electric power steering system 42 are not limited to the above-described embodiment.

For example, the battery electric vehicle 100 may employ a column-assist electric power steering system 42. In this case, the power steering motor 22 is connected to the column 16 and transmits driving force to the column 16.

For example, the battery electric vehicle 100 may employ a pinion-assist electric power steering system 42. In this case, the power steering motor 22 is connected to the pinion of the rack and pinion included in the transmission unit 18, and transmits driving force to the pinion.

The steering mechanism 41 of the above-described battery electric vehicle 100 includes a rack and pinion in the transmission unit 18. However, the steering mechanism 41 of the above-described battery electric vehicle 100 does not necessarily need to include a rack and pinion in the transmission unit 18. For example, the steering mechanism 41 may include a ball-nut mechanism in the transmission unit 18.

The manner of connection between the suspension arm 36 and the vehicle body in the battery electric vehicle 100 is not limited to the that shown in Fig. 4. That is, the number and positions of the bushings 37 disposed in the battery electric vehicle 100 are not limited to those shown in Fig. 4.

The above-described battery electric vehicle 100 includes two drive units 20, that is, the drive unit 20 connected to the right front wheel and the drive unit 20 connected to the left front wheel. The configuration of the drive units 20 included in the battery electric vehicle 100 is not limited to the above-described embodiment.

For example, the battery electric vehicle 100 may include a single drive unit 20 connected to both the right front wheel and the left front wheel, instead of including two drive units 20. Hereinafter, the battery electric vehicle 100 adopting such a configuration will be referred to as a battery electric vehicle 100 according to a first modification.

For example, the battery electric vehicle 100 may include a single drive shaft 21 that extends along the rotation axes of the motors 25 respectively included in the two right and left drive units 20. Hereinafter, the battery electric vehicle 100 adopting such a configuration will be referred to as a battery electric vehicle 100 according to a second modification.

The configuration of each drive unit 20 included in the above-described battery electric vehicle 100 is not limited to that shown in Fig. 3. For example, the drive units 20 included in the battery electric vehicles 100 of the first modification and the second modification may each include a differential gear in addition to the motor 25 and the speed reducer 26.

In the battery electric vehicle 100, the positions at which the brake calipers 40 are disposed are not limited to the above-described embodiment.

The brake caliper 40 installed on the front wheel 10 may be disposed at a front portion of the front brake disc 38.

The brake caliper 40 installed on the rear wheel 11 may be disposed at a rear portion of the rear brake disc 39.

Various changes in form and details may be made to the examples above without departing from the scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A battery electric vehicle (100) configured to drive left and right front wheels (10) using electricity stored in a battery (14), the battery electric vehicle (100) comprising:
a drive unit (20) including a motor (25) and a speed reducer (26) configured to transmit rotation generated by the motor (25) to a drive shaft (21); and
a steering mechanism (41) configured to control a steered angle of the front wheels (10) in response to an operation of a steering wheel (15), wherein
the battery (14) is disposed between a driver's seat (12) and a front passenger seat (13) so as to extend from a front end to a rear end of a passenger compartment,
the drive unit (20) has a single-axis structure in which the speed reducer (26) and the drive shaft (21) are disposed on a rotation axis of the motor (25), and is disposed between the front wheels (10),
the steering mechanism (41) includes:
a transmission unit (18) disposed forward of the drive unit (20) and configured to convert a movement of the steering wheel (15) into a movement in a vehicle width direction;
tie rods (19) that are disposed at opposite ends of the transmission unit (18) in the vehicle width direction and connect hub carriers (34) of the respective front wheels (10) to the transmission unit (18);
an intermediate shaft (17) configured to transmit a movement of the steering wheel (15) to the transmission unit (18);
kingpins (35) that are pivot shafts of the hub carriers (34); and
suspension arms (36) each connecting a vehicle body and one of the kingpins (35) to each other,
each of the suspension arms (36) is connected to the vehicle body by multiple bushings (37),
the multiple bushings (37) include a front bushing (37A) and a rear bushing (37B) disposed rearward of the front bushing (37A), the front bushing (37A) having a greater rigidity than the rear bushing (37B),
each tie rod (19) is connected to the corresponding hub carrier (34) at a position forward of the corresponding kingpin (35), and
the intermediate shaft (17) extends in a space on side of the drive unit (20) in the vehicle width direction to connect the steering wheel (15) to the transmission unit (20).

2. The battery electric vehicle (100) according to claim 1, wherein
the transmission unit (18) is disposed below the drive shaft (21), and
the intermediate shaft (17) extends in a space below the drive shaft (21) to connect the steering wheel (15) to the transmission unit (18).

3. The battery electric vehicle (100) according to claim 2, wherein
the motor (25), the speed reducer (26), the drive shaft (21), and one of the front wheels (10) are arranged in that order in the vehicle width direction,
the motor (25) and the speed reducer (26) are surrounded by a housing (27),
the drive shaft (21) is connected to the speed reducer (26) inside the housing (27), protrudes from an end portion of the housing (27) in the vehicle width direction, and is connected to the one of the front wheels (10),
the housing (27) is configured such that the end portion (29), which surrounds the drive shaft (21), is narrower than a central portion (28) that surrounds the motor (25) and the speed reducer (26), and
the intermediate shaft (17) extends in a space on a side of the central potion (28) in the vehicle width direction and below the end portion (29) to connect the steering wheel (15) to the transmission unit (18).

4. The battery electric vehicle (100) according to any one of claims 1 to 3, wherein
each of the front wheels (10) and rear wheels (11) is provided with a brake caliper (40),
the brake caliper (40) installed on each front wheel (10) is disposed at a rear portion of a front brake disc (38), and
the brake caliper (40) installed on each rear wheel (11) is disposed at a front portion of a rear brake disc (39).

5. The battery electric vehicle (100) according to any one of claims 1 to 4, wherein
the steering mechanism (41) includes an electric power steering system (42) configured to reduce a force required to steer the steering wheel (15),
the electric power steering system (42) includes a power steering motor (22) configured to be driven in accordance with a movement of the steering wheel (15), and
the power steering motor (22) is disposed forward of the drive unit (20) and is connected to the transmission unit (18).
